# EUROPÄISCHE PATENTSCHRIFT

(11) **EP 0 881 130 B1**
(45) Veröffentlichungstag und Bekanntmachung des Hinweises auf die Patenterteilung: **08.12.2004**
(21) Anmeldenummer: 98107613.6
(22) Anmeldetag: 27.04.1998
(51) Int. Cl.: B60R 21/24, B60R 21/16

(54) **Gassack für ein Insassen-Rückhaltesystem in Fahrzeugen**
Air bag for an occupant restraint system in a vehicle
Sac gonflable pour un système de retenue d'un passager dans un véhicule

(30) Priorität: 28.05.1997 DE 29709389 U
(43) Veröffentlichungstag der Anmeldung: 02.12.1998
(73) Patentinhaber: TRW Automotive GmbH, 73553 Alfdorf (DE)
(72) Erfinder: Denz, Stefan, 79713 Bad Säckingen (DE); Lang, Norbert, 73575 Leinzell (DE)
(74) Vertreter: Degwert, Hartmut, Dipl.-Phys.

(56) Entgegenhaltungen:
- EP-A- 0 687 596
- EP-A- 0 875 426
- DE-C- 4 430 412
- GB-A- 2 318 767
- US-A- 5 338 061
- US-A- 5 586 782

## Beschreibung

Die Erfindung betrifft einen Gassack für ein Insassen-Rückhaltesystem in Fahrzeugen, aus zwei entlang ihrem Außenrand partiell miteinander verwebten Gewebelagen. Die gattungsgemäße EP 0 687 596 A zeigt einem solchen Gassack.

Zur Herstellung eines allgemein kissenförmigen, aufblasbaren Gassacks können zwei Textilmaterialstücke gleicher Form entlang ihrem Außenrand miteinander verbunden werden. Die Verbindung der beiden Textilmaterialstücke entlang Ihrem Außenrand erfolgt gewöhnlich durch Vernähen. Es ist aber auch möglich, eine Verbindung zwischen zwei Gewebelagen herzustellen, indem diese miteinander verwebt werden und an der Verbindungsfläche eine einzige Materialbahn bilden. Ein solcher Gassack kann in Jacquard-Webtechnik ausgeführt werden.

Beim Aufprall des Insassen und dessen anschließendem Eintauchen in den aufgeblasenen Gassack erfolgt der angestrebte Energieabbau durch kontrolliertes Abströmen des Füllgases aus dem Gassack. Schon einige zehn Millisekunden nach diesem Aufprall ist das Gas nahezu vollständig aus dem Gassack abgeströmt. Bei einem Folgeaufprall oder Überschlag des Fahrzeuges kann der Gassack keinen Schutz mehr bieten.

Durch die Erfindung wird ein Gassack für ein Insassen-Rückhaltesystem in Fahrzeugen geschaffen, der über einen längeren Zeitraum von bis zu mehreren Sekunden Schutz bietet und dennoch beim Aufprall des Insassen und beim Eintauchen desselben in den aufgeblasenen Gassack die Aufprallenergie im erforderlichem Maße abbaut. Zu diesem Zweck weist der Gassack mehrere Besonderheiten auf. Zum einen sind die Gewebelagen, aus denen er besteht, weitgegend luftdicht ausgebildet. Ferner ist sein Volumen duch partielles Verweben der Gewebelagen innerhalb des Außenrandes in mehrere Kammern unterteilt. Diese Kammern sind durch wenigstens einen, zwischen den miteinander verwebten Bereichen der Gewebelagen verbleibenden, gedrosselten Durchgang miteinander verbunden. Schließlich wird nur ein Teil der Kammern durch eine Druckgasquelle direkt gefüllt; der übrige Teil der Kammern wird indirekt über den gedrosselten Durchgang gefüllt. Durch das Verweben der beiden Gewebelagen entlang ihrem Außenrand wird eine luftdichte Verbindung erzielt. Da die Gewebelagen selbst weitgehend luftdicht ausgebildet sind, ist der Gassack insgesamt in solchem Maße luftdicht, daß eine Standzeit von bis zu mehreren Sekunden erreicht werden kann. Da auch die Unterteilung des Gassacks in mehrere Kammern durch Verweben der Gewebelagen miteinander ausgeführt ist, wird die Dichtheit des Gassacks nicht beeinträchtigt, im Gegensatz zur üblichen Verbindungsstechnik durch Vernähen.

Bei Aktivierung des Rückhaltesystems wird zunächst nur ein Teil der Kammern des Gassacks durch eine Druckgasquelle gefüllt. Dies ist derjenige Teil der Kammern, an denen nach der Erfahrung ein erster Kontakt mit dem Körper des Insassen zu erwarten ist. Beim Aufprall des Insassen auf den Gassack wird das Füllgas aus den zuerst gefüllten Kammern verdrängt. Über den gedrosselten Durchgang kann es nun in die übrigen Kammern einströmen. Der Strömungswiderstand an dem gedrosselten Durchgang ist auf das gewünschte Energieabbau-Verhalten abgestimmt. Bei einem komplexen Unfallhergang, insbesondere bei einem Überschlag und bei Verwendung des Gassacks als Seitenaufprallschutz im Kopfbereich, kann der Insasse mehrfach an verschiedenen Stellen auf dem Gassack auftreffen. Der Energieabbau erfolgt dabei jeweils durch Verdrängen des Füllgases aus der Kammer, auf die der Insasse auftrifft, in die übrigen Kammern.

Weitere Merkmale und Vorteile der Erfindung ergeben sich aus der folgenden Beschreibung und aus der Zeichnung auf die Bezug genommen wird. In der Zeichnung zeigen:
Figur 1 schematisch eine Draufsicht auf einen entfalteten Gassack als Schutz gegen einen Seitenaufprall im Kopfbereich;
Figur 2 einen vergrößerten Ausschnitt aus Figur 1;
Figur 3 eine Schnittansicht entlang Linie III - III in Figur 2;
Figur 4 eine Seitenansicht einer abgewandelten Ausführungsform des Gassacks;
Figur 5 eine vergrößerte Detailansicht aus Figur 4;
Figur 6 eine Draufsicht eines entfalteten Gassacks, der die Fenster eines Fahrzeugs von der A-Säule bis zur C-Säule abdeckt und als Kopfschutz gegen einen Seitenaufprall wirksam ist;
Figur 7 eine schematische Darstellung einer Abströmöffnung mit Filterwirkung;
Figuren 8 und 9 zwei weitere Ausführungsformen eines Gassacks; und
Figuren 10 und 11 zwei weitere Ausführungsformen eines Gassacks.

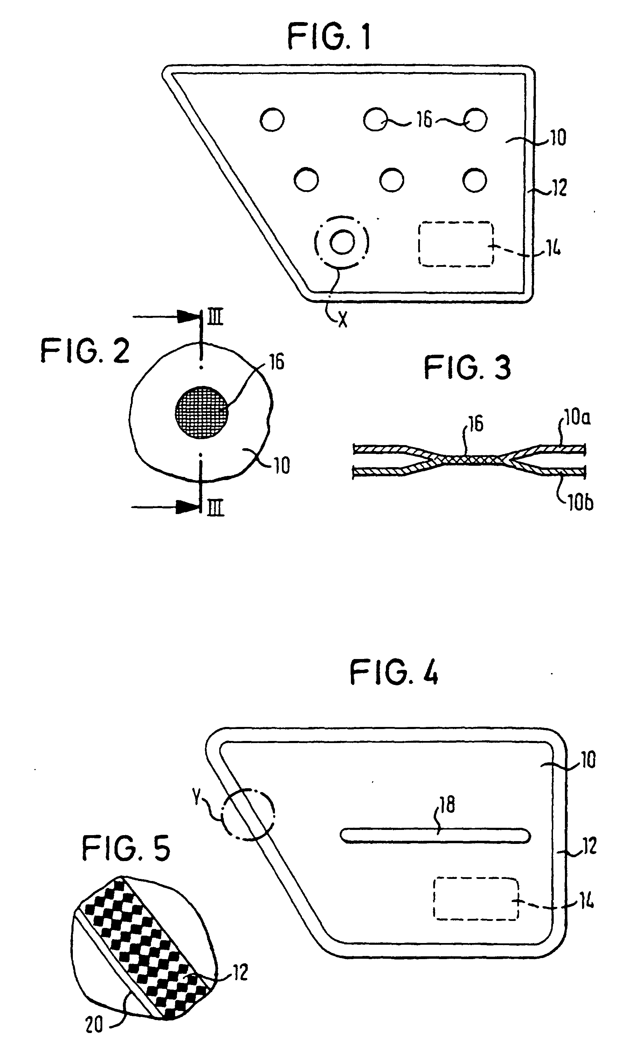

Der in Figur 1 im entfalteten, ausgebreiteten Zustand gezeigte Gassack 10 besteht aus zwei übereinanderliegenden Gewebelagen, die entlang ihrem Außenrand 12 miteinander verwebt sind. Eine der beiden Gewebelagen weist eine Einblasöffnung 14 zum Anschluß an eine Druckgasquelle auf. Innerhalb des Außenrandes 12 sind die beiden Gewebelagen an mehreren Verbindungsstellen 16 durch Verweben in Verbund gebracht. Sowohl der Außenrand 12 als auch die Verbindungsstellen 16 bilden durch die Technik des Verwebens der beiden Gewebelagen einen luftdichten Abschluß. Die Gewebelagen selbst sind weitgehend luftdicht ausgebildet. Der Grad der Luftdichtheit wird duch die angestrebte Standzeit des aufgeblasenen Gassacks bestimmt. Zur Erzielung der benötigten Gasdichtheit kommen folgende Behandlungsmethoden, einzeln oder in Kombination, in Betracht:
- Waschen der aneinandergewebten Textilrohlinge mit Auslösung des Hydroschrumpfes;
- Trocknen mit Auslösung des Thermoschrumpfes;
- Vollständiges oder partielles Beschichten auf der Innenseite.

Wie aus Figur 3 ersichtlich ist, sind die beiden Gewebelagen 10a, 10b an den Verbindungsstellen 16 miteinander in innigem Verbund und bilden eine einzige Gewebebahn. Durch die Verbindungsstellen 16 ist das Gesamtvolumen des Gassacks 10 in mehrere Kammern unterteilt. Diese Kammern stehen untereinander über gedrosselte Durchgänge in Verbindung, die zwischen den Verbindungsstellen 16 verbleiben.

Die in Figur 4 gezeigte Ausführungsform unterscheidet sich von der nach Figur 1 lediglich in der Aufteilung des Gassackvolumens. Durch einen langgestreckten Verbindungsstreifen 18 ist das Gassackvolumen in eine obere und eine untere Kammer unterteilt. Zwischen den Enden des Verbindungsstreifens 18 und dem Außenrand 12 ist jeweils ein gedrosselter Durchgang zwischen den Kammern gebildet.

Wie die Detailansicht in Figur 5 zeigt, ist die Schnittlinie 20, entlang welcher die aneinandergewebten Rohlinge des Gassacks aus dem Gewebe getrennt werden, außerhalb des Außenrandes 12 gelegen. Auf diese Weise wird eine Schwächung des Verbundes entlang dem Außenrand 12 vermieden.

Die in den Figuren 1 bis 5 gezeigten Ausbildungen des Gassacks sind als Kopfschutz gegen einen Seitenaufprall vorgesehen.

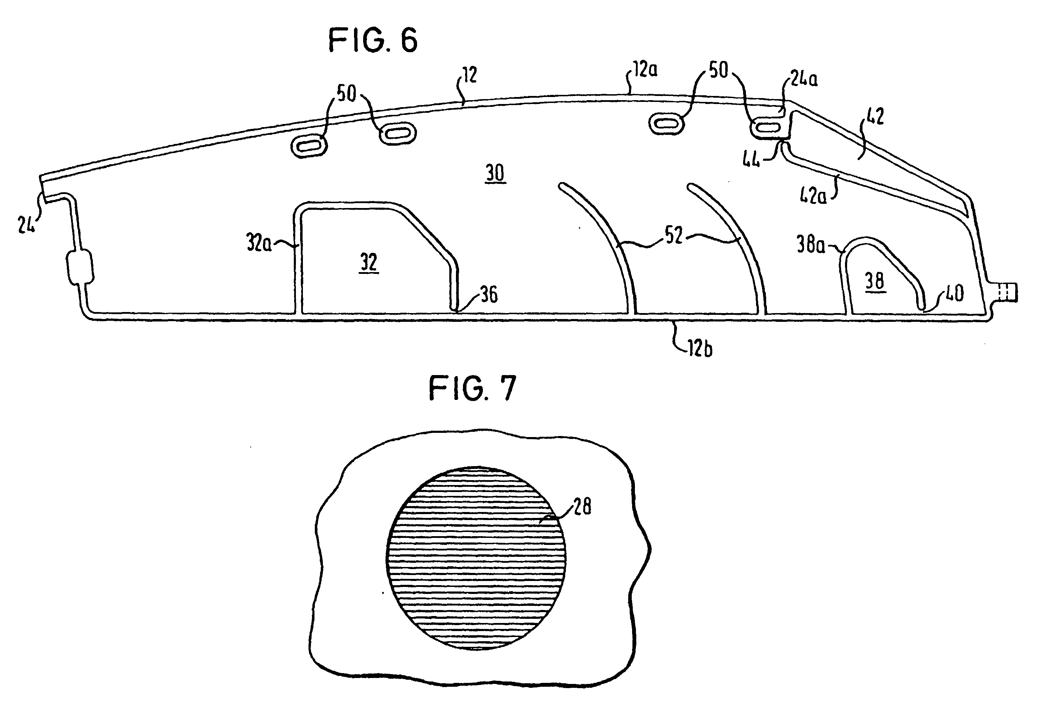

Die in Figur 6 gezeigte Ausführungsform des Gassacks besteht wiederum aus zwei, entlang ihrem Außenrand 12 partiell miteinander verwebten, übereinanderliegenden Gewebelagen. Diese Gewebelagen haben insgesamt eine langgestreckte Form, da der Gassack im entfalteten Zustand zwischen der A-Säule und der C-Säule aufgespannt ist, um die Seitenfenster des Fahrzeugs als Kopfschutz gegen einen Seitenaufprall abzudecken. Während der obere Rand 12a entsprechend der Dachkrümmung eines Fahrzeugs gekrümmt verläuft, erstreckt sich der untere Rand 12b geradlinig. Zwischen dem hinteren Ende des oberen Randes 12a und dem nach oben abgewinkelten, hinteren Ende des unteren Randes 12b ist eine Einführöffnung 24 für einen rohrförmigen Diffusor oder dergleichen gebildet, der sich bis in eine Tasche 24a im vorderen Bereich unter dem oberen Rand 12a erstreckt. Das Volumen des Gassacks ist in mehrere Kammern unterteilt. Durch den Außenrand 12 ist eine langgestreckte Hauptkammer 30 begrenzt. Eine zweite, wesentlich kleinere Kammer 32 ist im hinteren Bereich des Gassacks zwischen dem unteren Rand 12b und einem von diesem rechtwinklig ausgehenden Saumstreifen 32a abgegrenzt, der sich über etwa die halbe Höhe des Gassacks erstreckt, dann rechtwinklig nach vorne abgebogen ist, anschließend schräg nach unten und schließlich senkrecht bis nahe dem unteren Rand 12b verläuft. Zwischen dem Ende des Saumstreifens 32a und dem unteren Rand 12b ist ein gedrosselter Durchgang 36 zwischen den Kammern 30 und 32 gebildet. Entlang dem Saumstreifen 32a sind die beiden übereinanderliegenden Gewebelagen miteinander verwebt.

In ähnlicher Weise ist eine dritte Kammer 38 nahe dem vorderen Ende des Gassacks durch den unteren Rand 12b und einen Saumstreifen 38a abgegrenzt. Zwischen der Hauptkammer 30 und der dritten Kammer 38 besteht wiederum ein gedrosselter Durchgang 40.

Eine vierte Kammer 42 ist am vorderen Ende des Gassacks zwischen dem oberen Rand 12a und einem Saumstreifen 42a gebildet. Die Kammer 42 hat die Form eines langgestreckten Dreiecks und ist über einen gedrosselten Durchgang 44 mit der Hauptkammer 30 verbunden.

Die beiden Gewebelagen sind ferner in geringem Abstand vom oberen Rand 12a entlang mehreren ringförmig geschlossenen Saumstreifen 50 miteinander verwebt. Diese Saumstreifen 50, die vorzugsweise eine gestreckt Form haben, dienen der Abgrenzung eines Durchgangs für Befestigungsmittel, insbesondere Befestigungsschrauben oder dergleichen.

Innerhalb der Hauptkammer 30 des Gassacks sind zwei gekrümmte Saumstreifen 52, die vom unteren Rand 12b ausgehen, bis über die halbe Höhe dieser Hauptkammer 30 angebracht. Diese Saumstreifen 52 dienen hauptsächlich der Formgebung des aufgeblasenen Gassacks. Auch die Saumstreifen 32a, 38a und 42a tragen zur Formgebung des Gassacks bei; ihre primäre Funktion ist aber die Abgrenzung der Kammern 32, 38 und 42 vom Volumen der Hauptkammer 30. Während die Hauptkammer 30 im Aktivierungsfalle direkt über den durch die Öffnung 24 eingeschobenen, rohrförmigen Diffusor befüllt wird, werden die Kammern 32, 38 und 42 indirekt über die gedrosselten Durchgänge 36, 40 und 44 befüllt.

Figur 7 zeigt eine mögliche Ausgestaltung einer Abströmöffnung 28 in einer der Gewebelagen. Diese Abströmöffung 28 hat bei der gezeigten Ausführungsform eine kreisrunde Kontur. Innerhalb dieser Kontur sind Kett- und Schußfäden frei flottierend. Auf diese Weise wird zugleich mit der lokal erwünschten Gasdurchlässigkeit eine Filterwirkung erzielt.

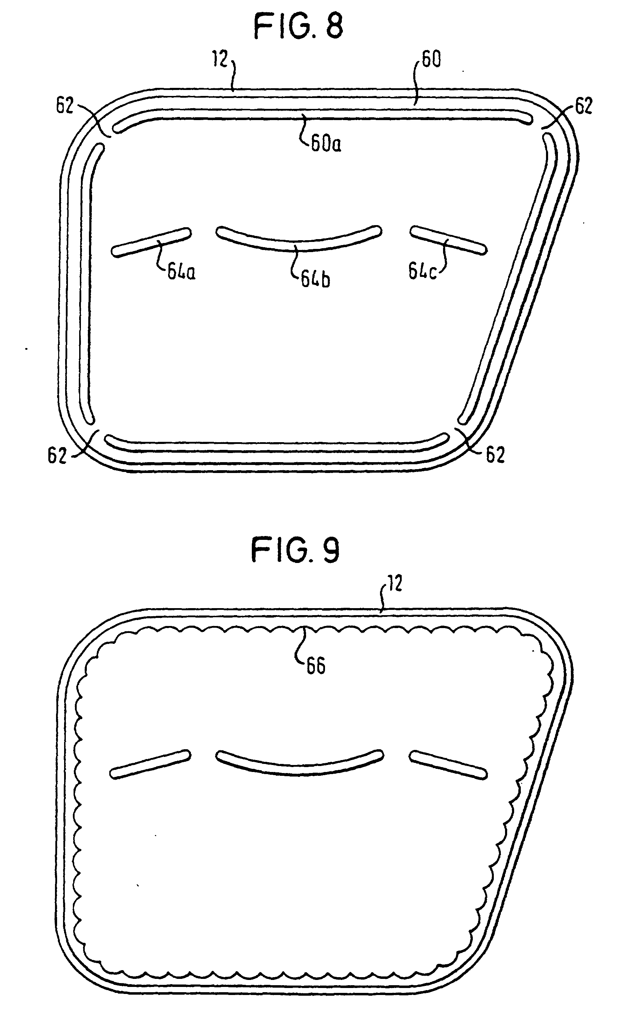

Die in den Figuren 8 und 9 gezeigten Ausführungsformen des Gassacks dienen dem Seitenaufprallschutz im Kopf- und Thoraxbereich. Sie erstrecken sich im aktivierten Zustand zwischen der A- und B-Säule oder der B- und C-Säule. Sie sind ähnlich aufgebaut wie die in den Figuren 1 bis 5 gezeigten Ausführungsformen, haben jedoch einige Besonderheiten.

Bei der Ausführungsform nach Figur 8 erstreckt sich innerhalb des Außenrandes 12 parallel zu diesem eine schmale, ringförmige Kammer 60, die durch einen Saumstreifen 60a abgegrenzt ist. An den vier Ecken des Gassacks ist diese ringförmige Kammer 60 jeweils über einen gedrosselten Durchgang 62 mit dem innenliegenden Volumen des Gassacks verbunden. Etwas oberhalb der mittleren Höhe des Gassacks sind dessen zwei Gewebelagen entlang drei Saumstreifen 64a, 64b, 64c miteinander verwebt. Diese Saumstreifen 64a, 64b und 64c dienen im wesentlichen der Formgebung des Gassacks durch Begrenzung seiner Ausdehnung quer zu den Ebenen der Gewebelagen.

Die Besonderheit der Ausführungsform nach Figur 9 besteht darin, daß der Außenrand 12, entlang dem die beiden Gewebelagen des Gassacks miteinander verwebt sind, innenseitig eine gewellte Kontur 66 aufweist. Durch diese gewellte Kontur wird eine verbesserte Lastverteilung zwischen Kett- und Schußfäden erreicht.

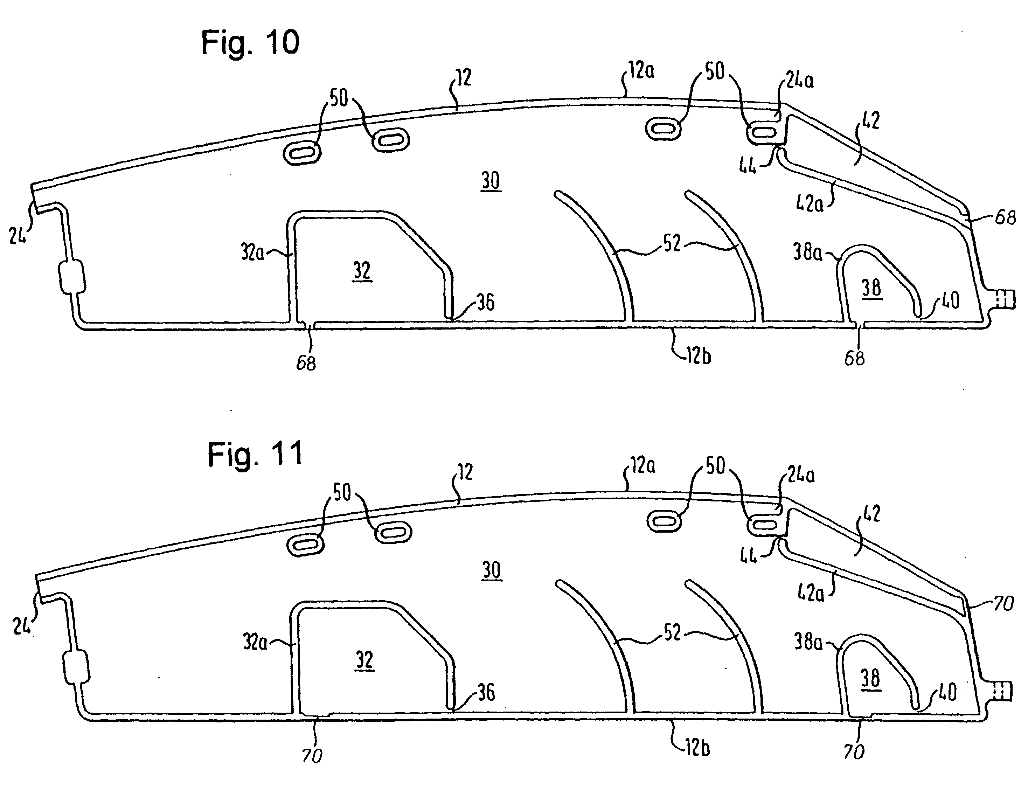

Figur 10 zeigt eine Ausführungsform des Gassacks, die im wesentlichen der in Figur 6 gezeigten Ausführungsform entspricht. Lediglich am Außenrand 12 des Gassacks sind drei Gasaustrittsöffnungen gebildet, indem jeweils eine Unterbrechung 68 des Gewebeverbunds zwischen den Gewebelagen gebildet ist. Durch diese Gasaustrittsöffnungen entsteht eine gezielte Undichtigkeit des Gassacks, so daß beim Befüllen des Gassacks sowie beim Aufprall eines Fahrzeuginsassen ein zu hoher Innendruck vermieden werden kann.

Auch die in der Figur 11 gezeigte Ausführungsform des Gassacks entspricht im wesentlichen der in Figur 6 gezeigten Ausführungsform. Um einen zu hohen Innendruck im Gassack, beispielsweise beim Befüllen oder beim Aufprall eines Fahrzeuginsassen zu vermeiden, sind im Außenrand 12 drei Sollbruchstellen 70 ausgebildet, die bei einem vorbestimmten Innendruck des Gassacks ausreißen, wodurch dann Gas aus dem Gassack entweichen kann. Im Bereich der Sollbruchstellen wird eine Schwächung des Gewebeverbunds zwischen den Gewebelagen dadurch erreicht, daß lediglich ein Teil der im Außenrand liegenden Fäden, beispielsweise 5 bis 10 Fäden, miteinander verwebt werden.

## Patentansprüche

1. Gassack für ein Insassen-Rückhaltesystem in Fahrzeugen, aus zwei entlang ihrem Außenrand (12) partiell miteinander verwebten Gewebelagen (10a, 10b), **dadurch gekennzeichnet, daß**:
a) die Gewebelagen (10a, 10b) weitgehend luftdicht ausgebildet sind;
b) das Volumen des Gassacks durch partielles Verweben der Gewebelagen (10a, 10b) innerhalb des Außenrandes (12) in mehrere Kammern (30, 32, 38, 42) unterteilt ist;
c) die Kammern (30, 32, 38, 42) durch wenigstens einen zwischen den miteinander verwebten Bereichen (16, 18) der Gewebelagen verbleibenden, gedrosselten Durchgang (36, 40, 44) miteinander verbunden sind;
d) nur ein Teil der Kammern (30) durch eine Druckgasquelle direkt befüllbar ist und der übrige Teil der Kammern (32, 38, 42) indirekt über den gedrosselten Durchgang (36, 40, 44) befüllbar ist.

2. Gassack nach Anspruch 1, **dadurch gekennzeichnet, daß** nach Befüllung des einen Teils der Kammern (30) das darin eingeschlossene Druckgas beim Aufprall des Insassen auf den entsprechenden Teil des Gassacks in den übrigen Teil der Kammern (32, 38, 42) verdrängt wird.

3. Gassack nach Anspruch 2, **dadurch gekennzeichnet, daß** der gedrosselte Durchgang (36, 40, 44) einen Strömungswiderstand aufweist, der durch den beim Eindringen des Insassen in einen befüllten Teil des Gassacks konstruktiv vorgegebenen Energieabbau bestimmt ist.

4. Gassack nach einem der vorstehenden Ansprüche, **dadurch gekennzeichnet, daß** die Gewebelagen durch Waschen einem Hydroschrumpf unterzogen sind.

5. Gassack nach einem der vorstehenden Ansprüche, **dadurch gekennzeichnet, daß** die Gewebelagen durch Erwärmen und Trocknen einem Thermoschrumpf unterzogen sind.

6. Gassack nach einem der vorstehenden Ansprüche, **dadurch gekennzeichnet, daß** die Gewebelagen innnenseitig wenigstens partiell beschichtet sind.

7. Gassack nach einem der vorstehenden Ansprüche, **dadurch gekennzeichnet, daß** wenigstens eine Gasaustrittsöffnung (28) in einer Gewebelage durch lokal flottierende Kettfäden und Schußfäden gebildet ist.

8. Gassack nach einem der vorstehenden Ansprüche, **dadurch gekennzeichnet, daß** wenigstens eine Gasaustrittsöffnung am Außenrand (12) durch eine Unterbrechung (68) des Gewebeverbundes zwischen den Gewebelagen gebildet ist.

9. Gassack nach einem der vorstehenden Ansprüche, **dadurch gekennzeichnet, daß** wenigstens eine Sollbruchstelle (70) im Außenrand (12) durch eine Schwächung des Gewebeverbunds zwischen den Gewebelagen gebildet ist.

10. Gassack nach einem der vorstehenden Ansprüche, **dadurch gekennzeichnet, daß** die Gewebelagen entlang wenigstens eines Bereiches in Form eines geschlossenen Ringes (50) für den Durchgang eines Befestigungsmittels miteinender verwebt sind.

11. Gassack nach einem der vorstehenden Ansprüche, **dadurch gekennzeichnet, daß** die Gewebelagen entlang ihrem Außenumfang einen durch Verweben gebildeten Saum aufweisen, der einen wellenförmigen Innenrand (66) aufweist.

12. Gassack nach einem der vorstehenden Ansprüche, **dadurch gekennzeichnet, daß** eine ringförmige Kammer (60) entlang dem Außenumfang (12) der Gewebelagen abgegrenzt ist.

13. Gassack nach Anspruch 12, **dadurch gekennzeichnet, daß** die ringförmige Kammer (60) in mehreren Eckbereichen einen gedrosselten Durchgang (62) zu einer innenliegenden Kammer aufweist.

14. Gassack nach einem der vorstehenden Ansprüche, **dadurch gekennzeichnet, daß** die Ausdehnung des Gassacks quer zu den Ebenen der Gewebelagen durch mehrere linienförmige Saumstreifen (64a, 64b, 64c), an denen die Gewebelagen verwebt sind, begrenzt ist.

15. Gassack nach einem der vorstehenden Ansprüche, **gekennzeichnet durch** folgende Merkmale:
a) eine langgestreckte Form entsprechend der Form der Seitenscheiben eines PKW zwischen A-Säule und C-Säule, mit einem oberen, gekrümmten Rand (12a) und einem unteren, weitgehend geradlinigen Rand (12b);
b) eine langgestreckte Hauptkammer (30), die zwischen dem oberen Rand (12a) und dem unteren Rand (12b) begrenzt ist;
c) eine Kammer (32), die im hinteren Bereich des Gassacks **durch** einen Saumstreifen (32a) abgegrenzt ist, der vom unteren Rand (12a) ausgeht und sich bis etwa zur halben Höhe des Gassacks erstreckt und einen gedrosselten Durchgang (36) zur Hauptkammer (30a) aufweist;
d) eine Kammer (38), die im vorderen Bereich des Gassacks **durch** einen Saumstreifen (38a) abgegrenzt ist, der vom unteren Rand (12a) ausgeht und sich bis etwa auf eine Drittel der Höhe des Gassacks erstreckt und einen gedrosselten Durchgang (40) zur Hauptkammer (30a) aufweist; und
e) eine Kammer (42), die im vorderen Bereich des Gassacks zwischen dem oberen Rand (12a) und einem Saumstreifen (42a) abgegrenzt ist, der einen gedrosselten Durchgang (44) zur Hauptkammer (30a) aufweist, wobei diese Kammer (42) die allgemeine Form eines langgestreckten Dreiecks aufweist.

## Claims

1. A gas bag for an occupant restraint system in a vehicle, made up of two plies of fabric (10a, 10b) partially interwoven along their outer edges (12), **characterized in that**
a) the plies of fabric (10a, 10b) are made to be substantially air-tight;
b) the volume of the gas bag is divided into several chambers (30, 32, 38, 42) by partial interweaving of the plies of fabric (10a, 10b) within the outer edges (12);
c) the chambers (30, 32, 38, 42) are interconnected by at least one choked port (36, 40, 44) remaining between the interwoven portions (16, 18) of the plies of fabric;
d) only part of the chambers (30) is adapted to be filled directly by a compressed gas source and the remaining part of the chambers (32, 38, 42) is adapted to be filled indirectly via the choked port (36, 40, 44).

2. The gas bag as set forth in claim 1, **characterized in that** after filling the one part of the chambers (30) the compressed gas enclosed therein is displaced into the remaining part of the chambers (32, 38, 42) on impact of the occupant against the corresponding portion of the gas bag.

3. The gas bag as set forth in claim 2, **characterized in that** the choked port (36, 40, 44) has a flow resistance which is determined by the energy dissipation occurring when a filled portion of the gas bag cushions the occupant, such energy dissipation being predetermined by design.

4. The gas bag as set forth in any of the preceding claims, **characterized in that** the plies of fabric are subjected to hydroshrinkage by washing.

5. The gas bag as set forth in any of the preceding claims, **characterized in that** the plies of fabric are subjected to thermoshrinkage by heating and drying.

6. The gas bag as set forth in any of the preceding claims, **characterized in that** the plies of fabric are at least partially coated on the inside.

7. The gas bag as set forth in any of the preceding claims, **characterized in that** at least one gas exit port (28) is formed in a ply of fabric by locally floating warp threads and weft threads.

8. The gas bag as set forth in any of the preceding claims, **characterized in that** at least one gas exit port is formed at the outer edges (12) by an interruption (68) of the fabric composite between the plies of fabric.

9. The gas bag as set forth in any of the preceding claims, **characterized in that** at least one predetermined breaking site (70) is formed in the outer edges (12) by a weakening of the fabric composite between the plies of fabric.

10. The gas bag as set forth in any of the preceding claims, **characterized in that** the plies of fabric are interwoven along at least one portion in the form of a closed ring (50) for insertion of a fastener means.

11. The gas bag as set forth in any of the preceding claims, **characterized in that** along their outer circumference the plies of fabric have a hem formed by interweaving, the hem having a corrugated inner edge (66).

12. The gas bag as set forth in any of the preceding claims, **characterized in that** an annular chamber (60) is defined along the outer circumference (12) of the plies of fabric.

13. The gas bag as set forth in claim 12, **characterized in that** in several comer regions the annular chamber (60) includes a choked port (62) to an internal chamber.

14. The gas bag as set forth in any of the preceding claims, **characterized in that** the extent of the gas bag transversely to the planes of the plies of fabric is defined by several line-shaped hem strips (64a, 64b, 64c) at which the plies of fabric are interwoven.

15. The gas bag as set forth in any of the preceding claims, **characterized by** the following features:
a) an elongated shape corresponding to the shape of the side windows of a motor car between the A and C pillars, with an upper curved edge (12a) and a lower substantially straight-line edge (12b);
b) an elongated main chamber (30) defined between the upper edge (12a) and the lower edge (12b);
c) a chamber (32) defined in the rear portion of the gas bag by a hem strip (32a) starting from the lower edge (12a) and extending up to roughly half the height of the gas bag and having a choked port (36) to the main chamber (30a);
d) a chamber (38) defined in the front portion of the gas bag by a hem strip (38a) starting from the lower edge (12a) and extending up to roughly a third of the height of the gas bag and having a choked port (40) to the main chamber (30a); and
e) a chamber (42) defined in the front portion of the gas bag between the upper edge (12a) and a hem strip (42a) having a choked port (44) to the main chamber (30a), the chamber (42) having generally the shape of an elongated triangle.

## Revendications

1. Coussin à gaz pour un système de retenue d'occupants dans des véhicules, constitué par deux couches de tissu (10a, 10b) tissées partiellement l'une à l'autre sur leur bord extérieur (12), **caractérisé en ce que**
a) les couches de tissu (10a, 10b) sont réalisées essentiellement étanches à l'air ;
b) le volume du coussin à gaz est subdivisé en plusieurs chambres (30, 32, 38, 42) par tissage partiel des couches de tissu (10a, 10b) à l'intérieur du bord extérieur (12) ;
c) les chambres (30, 32, 38, 42) sont reliées les unes aux autres par au moins un passage (36, 40, 44) à étranglement subsistant entre les régions (16, 18) tissées les unes aux autres, des couches de tissu.
d) une partie seulement des chambres (30) peut être remplie directement par une source de gaz comprimé, et la partie subsistante des chambres (32, 38, 42) peut être remplie indirectement via le passage à étranglement (36, 40, 44).

2. Coussin à gaz selon la revendication 1, **caractérisé en ce que** après avoir remplie ladite une partie des chambres (30), le gaz comprimé renfermé dans celle-ci est refoulé dans la partie subsistante des chambres (32, 38, 42) lors d'un impact de l'occupant sur la partie correspondante du coussin à gaz.

3. Coussin à gaz selon la revendication 2, **caractérisé en ce que** le passage à étranglement (36, 40, 44) présente une résistance d'écoulement qui est déterminée par la dissipation d'énergie prédéterminée par construction, qui se produit lorsque l'occupant pénètre dans une partie remplie du coussin à gaz.

4. Coussin à gaz selon l'une des revendications précédentes, **caractérisé en ce que** les couches de tissus sont soumises à un rétrécissement hydro-rétrécissement par lavage.

5. Coussin à gaz selon l'une des revendications précédentes, **caractérisé en ce que** les couches de tissus sont soumises à un rétrécissement thermique par chauffage et séchage.

6. Coussin à gaz selon l'une des revendications précédentes, **caractérisé en ce que** les couches de tissus sont revêtues au moins partiellement sur la face intérieure.

7. Coussin à gaz selon l'une des revendications précédentes, **caractérisé en ce qu'**au moins un orifice de sortie de gaz (28) est formé dans une couche de tissu par des fils de chaîne et des fils de trame flottant localement.

8. Coussin à gaz selon l'une des revendications précédentes, **caractérisé en ce qu'**au moins un orifice de sortie de gaz est formé sur le bord extérieur (12) par une interruption (68) du tissu composite entre les couches de tissu.

9. Coussin à gaz selon l'une des revendications précédentes, **caractérisé en ce qu'**au moins un point de rupture (70) est formé dans le bord extérieur (12) par un affaiblissement du tissu composite entre les couches de tissu.

10. Coussin à gaz selon l'une des revendications précédentes, **caractérisé en ce que** les couches de tissus sont tissées l'une avec l'autre le long d'au moins une région en forme d'anneau (50) fermé, pour le passage d'un moyen de fixation.

11. Coussin à gaz selon l'une des revendications précédentes, **caractérisé en ce que** les couches de tissu présentent le long de leur périphérie extérieure un ourlet formé par tissage qui présente un bord intérieur (11) ondulé.

12. Coussin à gaz selon l'une des revendications précédentes, **caractérisé en ce qu'**une chambre annulaire (60) est définie le long de la périphérie extérieure (12) des couches de tissu.

13. Coussin à gaz selon la revendication 12, **caractérisé en ce que** la chambre annulaire (60) présente dans plusieurs régions de coin un passage (62) à étranglement vers une chambre interne.

14. Coussin à gaz selon l'une des revendications précédentes, **caractérisé en ce que** l'extension du coussin à gaz transversalement aux plans des couches de tissu est définie par plusieurs bandes d'ourlet (64a, 64b, 64c) en forme de lignes sur lesquelles les couches de tissu sont tissées.

15. Coussin à gaz selon l'une des revendications précédentes, **caractérisé par** les caractéristiques suivantes :
a) une forme allongée correspondant à la forme des vitres latérales d'un véhicule automobile entre la colonne A et la colonne C, avec un bord supérieur (12a) incurvé et un bord inférieur (12b) en grand partie rectiligne ;
b) une chambre principale (30) allongée qui est définie entre le bord supérieur (12a) et le bord inférieur (12b) ;
c) une chambre (32) qui est définie dans la région postérieure du coussin à gaz par une bande à ourlet (32a) qui part du bord inférieur (12a) et qui s'étend jusqu'à approximativement mi-hauteur du coussin à gaz et qui présente un passage (36) à étranglement vers la chambre principale (30a) ;
d) une chambre (38) qui est définie dans la région antérieure du coussin à gaz par une bande à ourlet (38a) qui part du bord inférieur (12a) et qui s'étend jusqu'à approximativement un tiers de la hauteur du coussin à gaz et qui présente un passage (40) à étranglement vers la chambre principale (30a) ; et
e) une chambre (42) qui est définie dans la région antérieure du coussin à gaz entre le bord supérieur (12a) et une bande à ourlet (42a) qui présente un passage (44) à étranglement vers la chambre principale (30a), cette chambre (42) présentant la forme générale d'un triangle allongé.
